# EUROPEAN PATENT APPLICATION

(11) **EP 4 489 262 A1**
(43) Date of publication of application: **08.01.2025**
(21) Application number: 22929963.1
(22) Date of filing: 20.12.2022
(51) Int. Cl.: H02J 50/12, B60L 5/00, B60L 53/122, B60L 53/65, B60L 53/66, B60M 7/00, H02J 7/00, H02J 50/80, H02J 50/90

(54) **POWER TRANSMISSION DEVICE, NON-CONTACT POWER SUPPLY SYSTEM, POWER TRANSMISSION METHOD, AND PROGRAM**

(30) Priority: 04.03.2022 JP 2022033618
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: OBAYASHI, Kazuyoshi, Kariya-city, Aichi 4488661 (JP); TANI, Keisuke, Kariya-city, Aichi 4488661 (JP); YAMAGUCHI, Nobuhisa, Kariya-city, Aichi 4488661 (JP); KANESAKI, Masaki, Kariya-city, Aichi 4488661 (JP); TAKEMURA, Yuichi, Kariya-city, Aichi 4488661 (JP); HASHIMOTO, Toshiya, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP)
(74) Representative: TBK
(86) International application number: PCT/JP2022/046934
(87) International publication number: WO 2023/166821

(57) **Abstract**

A power transmission apparatus (100) for wireless power transfer to a movable power receiving apparatus (200) includes a power transmission resonator (110) that includes a power transmission coil (112) and a transmission resonance capacitor unit (116), and a power transmission circuit (130) for supply of alternating-current power to the power transmission resonator. The power transmission apparatus includes a power-transfer request signal receiver (172) configured to receive a power-transfer request signal transmitted from the power receiving apparatus, and a switching unit (174). The switching unit is configured to, when the power-transfer request signal receiver receives the power-transfer request signal, change an input impedance of the power transmission resonator (110) to change a value of current flowing through the power transmission coil of the power transmission resonator to a controlled value enabled to transfer power from the power transmission coil to the power receiving apparatus.

## Description

### TECHNICAL FIELD

The present disclosure relates to power transmission apparatuses, wireless power transfer systems, and power transmission methods and programs.

### BACKGROUND

One of known contactless power transfer systems includes (i) a power transmission device, which has a function of changing an input impedance to a power-transmitting resonator using a variable capacitor, and (ii) a power receiving device, which is disclosed in, for example, Japanese Patent Application Publication No. 2021-23094.

In the contactless power transfer system disclosed in the patent publication, magnetic flux induced in a power transmission coil of the power transmission device changes depending on whether a power receiving coil of the power receiving device is in a facing state in which the power receiving coil faces the power transmission coil or in a non-facing state in which the power receiving coil does not face the power transmission coil. The change in the magnetic flux induced in the power transmission coil causes a capacitance across the variable capacitor to change.

Specifically, the capacitance across the variable capacitor is changed from a high value to a low value when the power receiving coil is changed from the non-facing state to the facing state. This causes the power transmission coil and power receiving coil to resonate with each other, and therefore the input impedance of the power-transmitting resonator is changed from a high value to a low value, so that a large amount of current flows in the power transmission coil, resulting in the contactless power transfer system being in a power transfer state.

In contrast, the capacitance across the variable capacitor is changed from a low value to a high value when the power receiving coil, which has been arranged to face the power transmitting coil, is arranged not to face the power transmitting coil. This causes the resonance between the power transmission coil and power receiving coil to be cancelled, and therefore the input impedance of the power transmitting resonator is changed from a low value to a high value, so that a standby current flows in the power transmission coil, resulting in the contactless power transfer system being in a power non-transfer state.

### SUMMARY

Variations in size of the power receiving coil, shape of the power receiving coil, and/or relative position of the power receiving coil relative to the power transmission coil may result in a reduction in the magnetic-flux change even if the power receiving coil, which has been arranged to face the power transmission coil, is changed not to face the power transmission coil. This may cause the power transmission coil not to resonate with the power receiving coil, resulting in power transfer from the power transmission device to the power receiving device not being started.

The present disclosure seeks to solve at least part of the above problem, and can be implemented by one or more exemplary aspects or their application examples.

One of the exemplary aspects of the present disclosure provides a power transmission apparatus for wireless power transfer to a movable power receiving apparatus. The power transmission apparatus includes a power transmission resonator that includes a power transmission coil and a power transmission resonance capacitor unit. The power transmission apparatus includes a power transmission circuit for supply of alternating-current power to the power transmission resonator, and a power-transfer request signal receiver configured to receive a power-transfer request signal transmitted from the power receiving apparatus. The power transmission apparatus includes a switching unit configured to, when the power-transfer request signal receiver receives the power-transfer request signal, change an input impedance of the power transmission resonator to change a value of current flowing through the power transmission coil of the power transmission resonator to a controlled value enabled to transfer power from the power transmission coil to the power receiving apparatus. This configuration of the power transmission apparatus reduces or prevents the occurrence of a glitch, such as no power transfer from the power transmission apparatus to the power receiving apparatus with the power receiving apparatus being changed from a non-facing state to a facing state with respect to the power transmission coil apparatus.

### BRIEF DESCRIPTION OF THE DRAWINGS

Fig. 1 is a schematic structural diagram illustrating a wireless power transfer system equipped with a plurality of power transmission apparatuses according to the first embodiment;
Fig. 2 is a circuit block diagram illustrating a schematic configuration of the wireless power transfer system;
Fig. 3 is a circuit block diagram illustrating a schematic configuration of a power transmission resonator located at an end of a power transmission section;
Fig. 4 is a circuit block diagram illustrating a schematic configuration of a power transmission resonator located in the power transmission section;
Fig. 5 is a flowchart illustrating a mode switching routine;
Fig. 6 a flowchart illustrating a first operation-mode switching task from a cutoff mode to a standby mode;
Fig. 7 a flowchart illustrating a second operation-mode switching task from the standby mode to a power transfer mode;
Fig. 8 a flowchart illustrating a third operation-mode switching task from the power transfer mode to the cutoff mode;
Fig. 9 is a first explanation diagram illustrating a first positional relationship between a traveling vehicle and the power transmission apparatus;
Fig. 10 is a second explanation diagram illustrating a second positional relationship between the traveling vehicle and the power transmission apparatus;
Fig. 11 is a third explanation diagram illustrating a third positional relationship between the traveling vehicle and the power transmission apparatus;
Fig. 12 is a fourth explanation diagram illustrating a fourth positional relationship between the traveling vehicle and the power transmission apparatus;
Fig. 13 is a fifth explanation diagram illustrating a fifth positional relationship between the traveling vehicle and the power transmission apparatus;
Fig. 14 is a sixth explanation diagram illustrating a sixth positional relationship between the traveling vehicle and the power transmission apparatus;
Fig. 15 is a schematic structural diagram illustrating a power transmission apparatus according to the second embodiment; and
Fig. 16 is a schematic structural diagram illustrating a power transmission apparatus according to the third embodiment.

### DETAILED DESCRIPTION OF EMBODIMENTS

### First embodiment

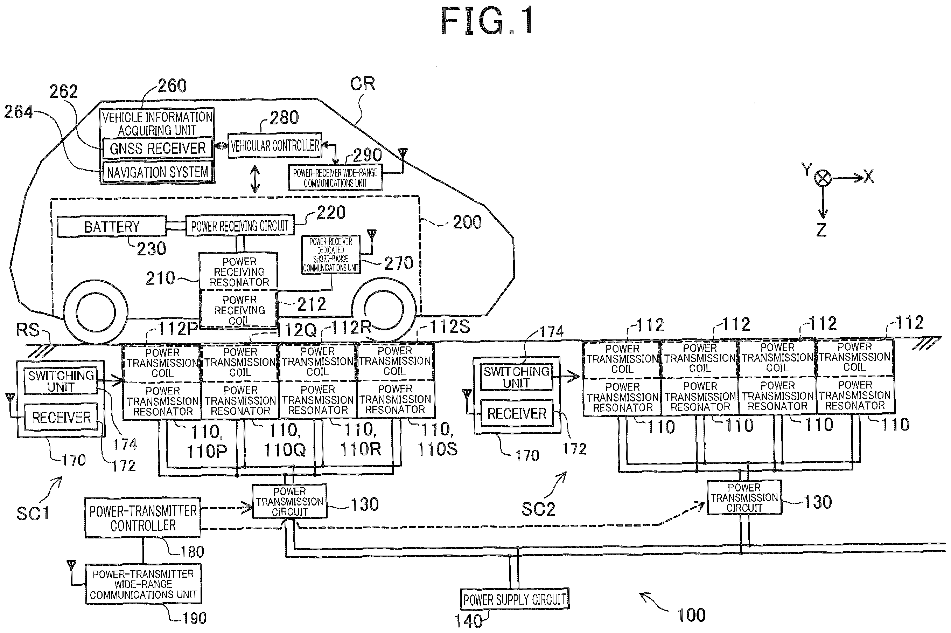

Fig. 1 is a schematic structural diagram illustrating a wireless power transfer system equipped with a plurality of power transmission apparatuses 100 according to the first embodiment of the present disclosure. The wireless power transfer system includes the power transmission apparatuses 100 and a power receiving apparatus 200 installed in each of vehicles CR and is configured such that each power transmission apparatus 100 is capable of wirelessly supplying power to the power receiving apparatus 200.

In each of Fig. 1 and the subsequent figures, reference character X, Y, and Z respectively represent three spatial axes perpendicular to one another. The directions in the respective X, Y, and Z special axes will also be referred to as X-, Y-, and Z-axis directions. Fig. 1 shows an example where the X-axis direction matches a traveling direction of the vehicle CR along a lane of a vehicle traveling road RS, the Y-axis direction matches a width direction of the vehicle traveling road RS, and the Z-axis direction matches the direction of gravity.

Each power transmission apparatus 100 includes a plurality of power transmission resonators 110, and a corresponding one of power transmission circuits 130. The power transmission apparatuses 100 include a power supply circuit 140 shared by the power transmission apparatuses 100. The power transmission resonators 110, the power transmission circuits 130, and the power supply circuit 140 according to the first embodiment are embedded inside the vehicle traveling road RS. The power transmission resonators 110, the power transmission circuits 130, and the power supply circuit 140 can be located to be exposed on the vehicle traveling road RS. The power transmission circuits 130 and the power supply circuit 140 can be located on a service road or a frontage road, or can be located at any position on the vehicle traveling road RS as long as the power transmission circuits 130 and the power supply circuit 140 do not impede the vehicle CR.

The power supply circuit 140 is, for example, an AC/DC converter, and is configured to convert alternating-current (AC) power supplied from, for example, an AC power source, such as a system power supply, into direct-current (DC) power, and supply the DC power to each power transmission circuit 130.

Each power transmission circuit 130 provided for corresponding power transmission resonators 110 is comprised of, for example, an inverter, and is configured to convert the DC power supplied from the power supply circuit 140 into AC power having a predetermined operating frequency and supply the AC power having the predetermined operating frequency to the corresponding power transmission resonators 110. Each power transmission circuit 130 can include a rectifier and/or a filter circuit.

Each power transmission resonator 110 includes a power transmission coil 112, and is configured to transmit, to the power receiving apparatus 200, AC power that is induced in the power transmission coil 112 based on electromagnetic induction.

As illustrated in Fig. 1, the power transmission resonators 110 include plural sets of four power transmission resonators 110P, 110Q, 110R, and 110S. The four power transmission resonators 110P, 110Q, 110R, and 110S of each set are sequentially embedded in the vehicle traveling road RS while being aligned linearly in the traveling direction of the vehicle CR, i.e., the X-axis direction. The power transmission resonators 110P, 110Q, 110R, and 110S of each set are adjacent to one another.

The power transmission circuits 130 are provided for the respective sets of the four power transmission resonators 110P, 110Q, 110R, and 110S. A first set of the four power transmission resonators 110P, 110Q, 110R, and 110S and a corresponding one of the power transmission circuits 130, which will be referred to as a first power transmission circuit 130, provided therefor constitute a first power transmission section SC1 arranged linearly in the traveling direction of the vehicle CR. For example, as illustrated in Fig. 1, a second set of the four power transmission resonators 110P, 110Q, 110R, and 110S and a corresponding one of the power transmission circuits 130, which will be referred to as a second power transmission circuit 130, provided therefor constitute a second power transmission section SC2; the second power transmission section SC2 is located to be separated by a predetermined distance from the first power transmission section SC1.

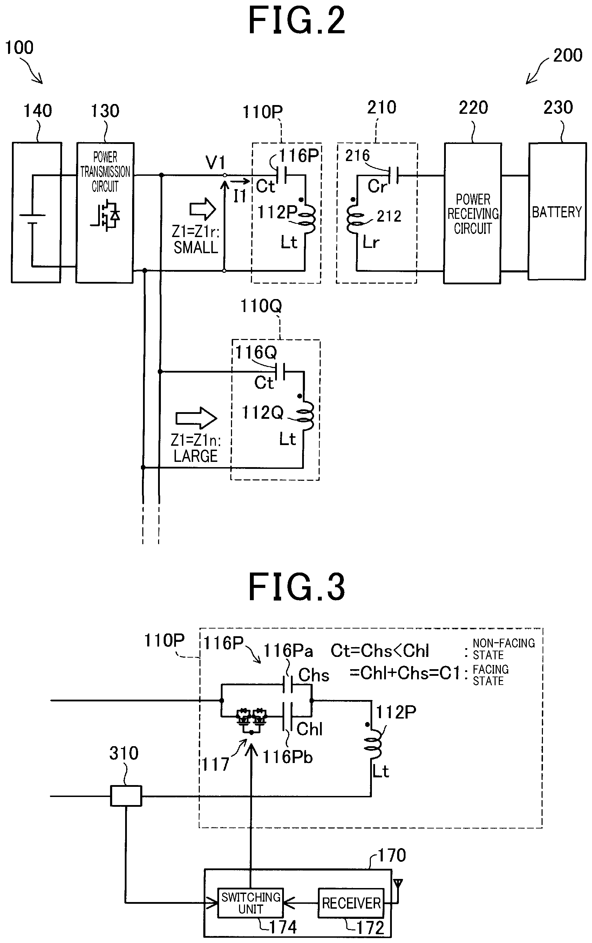

Each power transmission resonator 110 (110P, 110Q, 110R, or 110S) includes, as illustrated in Fig. 2, a resonance circuit comprised of the power transmission coil 112 (112P, 112Q, 112R, or 112S) and a power transmission resonance capacitor unit 116 (116P, 116Q, 116R, or 116S) connected thereto in series. The power transmission resonance capacitor unit 116 serves as a resonance capacitor for producing resonance of power supplied from the power transmission coil 112. A capacitance-variable unit, which will be described below, is used as the power transmission resonance capacitor unit 116 of each power transmission resonator 110.

Hereinafter, an AC voltage and an alternating current to be applied to each power transmission resonator 110 from the corresponding power transmission circuit 130 will be referred to as an AC voltage V1 and an alternating current I1. An operating frequency and an operating angular frequency of the AC voltage V1 and alternating current I1 will be referred to as an operating frequency f0 and ω0. The operating angular frequency ω0 can be equal to 2π·f0. The power transmission coil 112 (112 P, 112Q, 112R, or 112S) and the power transmission resonance capacitor unit 116 (116P, 116Q, 116R, or 116S) can be connected in parallel to each other.

A capacitance C1 of the power transmission resonance capacitor unit 116, when power supply from the power transmission resonator 110 to the power receiving apparatus 200 is carried out, is set to a value that causes an input impedance Z1 of the power transmission resonator 110, which is expressed by V1/I1, to be smaller, resulting in a large power-supply coil current flowing through the power transmission coil 112. In contrast, the capacitance C1 of the power transmission resonance capacitor unit 116, when no power supply from the power transmission resonator 110 to the power receiving apparatus 200 is carried out, is set to a value that causes the input impedance Z1 of the power transmission resonator 110 to be larger, resulting in a small standby coil current flowing through the power transmission coil 112.

The input impedance Z1 of the power transmission resonator 110 can be expressed as Z1 = j[ω0·L1 - 1/(ω0·C1)], where L1 represents a self-inductance of the power transmission coil 112. Setting the capacitance C1 of the power transmission resonance capacitor unit 116 to a power-supply capacitance that causes an absolute value of the value [ω0·L1 - 1/(ω0·C1)] to a predetermined impedance enables the input impedance Z1 to be smaller. In contrast, setting the capacitance C1 of the power transmission resonance capacitor unit 116 to a standby capacitance smaller than the power-supply capacitance; the standby capacitance causes the input impedance Z1 to become a predetermined impedance corresponding to a predetermined value of the standby coil current.

As described above, setting the capacitance C1 of the power transmission resonance capacitor unit 116, when power supply from the power transmission resonator 110 to the power receiving apparatus 200 is carried out, to the power-supply capacitance enables the predetermined impedance enables the input impedance Z1 to be smaller, and setting the capacitance C1 of the power transmission resonance capacitor unit 116, when no power supply from the power transmission resonator 110 to the power receiving apparatus 200 is carried out, to the standby capacitance enables the predetermined impedance enables the input impedance Z1 to be larger.

The capacitance C1 of the power transmission resonance capacitor unit 116, during power supply from the power transmission resonator 110 to the power receiving apparatus 200, is for example set to a value expressed by the following formula C1 = 1/(*ω*0² · *L1) .* The capacitance C1 of the power transmission resonance capacitor unit 116, during power supply from the power transmission resonator 110 to the power receiving apparatus 200, can be set such that an x-order harmonic frequency of the operating frequency f0 becomes a resonance frequency; x is a positive integer more than or equal to 2. That is, the capacitance C1 of the power transmission resonance capacitor unit 116, during power supply from the power transmission resonator 110 to the power receiving apparatus 200, can be so set based on, for example, the self-inductance L1 of the power transmission coil 112 and/or the operating frequency f0, in other words, the operating angular frequency ω0, in accordance with previously determined various setting conditions as to establish efficient transmission of the AC power having the operating frequency f0 between the power transmission resonator 110 and a power receiving resonator 210 of the power receiving apparatus 200.

The capacitance C1 of the power transmission resonance capacitor unit 116, during no power-supply from the power transmission resonator 110 to the power receiving apparatus 200, is set to a sufficiently smaller value than the value of the capacitance C1 of the power transmission resonance capacitor unit 116, during power supply from the power transmission resonator 110 to the power receiving apparatus 200.

The power receiving apparatus 200 is, as illustrated in Fig. 1, installed in one of various types of devices, such as electronic devices or electric vehicles, which operate based on electric power. Specifically, the power receiving apparatus 200 of the first embodiment is installed in the vehicle CR. For example, the vehicle CR is, for example, a vehicle, such as a hybrid vehicle or an electric vehicle, equipped with a drive motor that uses electric power as drive power. The power receiving apparatus 200 includes a power receiving resonator 210, a power receiving circuit 220, a battery 230, and a power-receiver dedicated short-range communications unit 270.

The power receiving resonator 210 is mounted on, for example, the bottom of the vehicle CR. The power receiving resonator 210 includes a power receiving coil 212. The power receiving resonator 210 is configured to receive AC power induced in the power receiving coil 212 in a resonant-coupling state where the power receiving coil 212 and one of the power transmission coils 112 are magnetically coupled to each other. The power receiving coil 212 is mounted at a predetermined position of the bottom of the vehicle CR; the position enables the power receiving coil 212 located thereat to face at least one of the power transmission coils 112. The power receiving circuit 220 is configured to perform charging of the battery 230 based on the AC power induced in the power receiving coil 212.

Like the power transmission resonator 110, the power receiving resonator 210 includes a power receiving coil 212 and a power receiving resonance capacitor 216 and is configured to acquire AC power that is induced in the power receiving coil 212. Specifically, the power receiving resonator 210 is configured to resonate with one of the power transmission resonators 110 to wirelessly receive AC power supplied from the power transmission apparatus 100. When the power receiving coil 212 becomes in a facing state in which the power receiving coil 212 faces the power transmission coil 112 of at least one of the power transmission resonators 110, the power receiving coil 212 and the power transmission coil 112 are magnetically coupled with each other, so that the power receiving resonator 210 resonates with the one of the power transmission resonators 110. A primary series secondary series capacitor system, which will also be referred to as a series-series resonance capacitor (SS) system, is applied to the system of the power transmission resonators 110 and the power receiving resonator 210. Additionally, a single-phase transmission and single-phase receiving contactless system, which is comprised of the single-phase power transmission coils 112 and the single-phase power receiving coil 212, is applied to the system of the power transmission resonators 110 and the power receiving resonator 210. In Fig. 2, the inductance of each power transmission coil 112 is represented as Lt, and the capacitance of each power transmission resonance capacitor unit 116 (116P, 116Q, 116R, or 116S) is represented as Ct. The inductance of the power receiving coil 212 is represented as Lr, and the capacitance of the power transmission resonance capacitor 216 is represented as Cr.

The power receiving circuit 220 is configured to convert AC power outputted from the power receiving resonator 210 into DC power. The DC power **outputted** from the power receiving circuit 220 can be used to, for example, charge the battery 230. The power receiving circuit 220 includes, for example, a filter circuit, a rectifier for converting the AC power into DC power, and a power converter for converting the DC power converted by the rectifier into DC power that is chargeable in the battery 230. The battery 230 is a secondary battery that outputs DC power for driving the drive motor that is a drive source of the vehicle CR. The DC power outputted from the power receiving circuit 220 can be used to charge an unillustrated auxiliary battery installed in the vehicle CR and/or drive the drive motor and/or auxiliary devices installed in the vehicle CR.

As illustrated in Fig. 1, the AC power is supplied from the power transmission circuit 130 in each power transmission section to a selected at least one of the power transmission coils 112 while the selected at least one power transmission coil 112 is in the facing state in which the power receiving coil 212 faces the selected power transmission coil 112. Electromagnetic coupling between the selected at least one power transmission coil 112 and the power receiving coil 212 cause the AC power to be transmitted from the power transmission coil 112 to the power receiving coil 212. The power receiving circuit 220 charges the battery 230 based on the AC power transmitted to the power receiving coil 212.

In contrast, as described later, no AC power is supplied from the power transmission circuit 130 in each power transmission section to each of the other power transmission coils 112 that is in a non-facing state in which the power receiving coil 212 does not face it.

Like the capacitance C1 of the power transmission resonance capacitor unit 116, the capacitance C2 of the power receiving resonance capacitor 216, during power supply from the power transmission resonator 110 to the power receiving resonator 220, is for example set to a value expressed by the following formula C2 = 1/(*ω*0² · L2) where L2 represents a self-inductance of the power transmission coil 212. The capacitance C2 of the power receiving resonance capacitor 216, during power supply from the power transmission resonator 110 to the power receiving resonator 220, can be set based on a coefficient of coupling between the power transmission coil 112 and the power receiving coil 212 or can be set such that the x-order harmonic frequency of the operating frequency f0 becomes the resonance frequency. That is, the capacitance C2 of the power receiving resonance capacitor 216, during power supply from the power transmission resonator 110 to the power receiving resonator 220, can be so set based on, for example, the self-inductance L2 of the power receiving coil 212, the operating frequency f0, in other words, the operating angular frequency ω0, and/or the coefficient of coupling, in accordance with previously determined various setting conditions as to establish efficient transmission of the AC power having the operating frequency f0 between the power transmission resonator 110 and the power receiving resonator 210.

The power-receiver dedicated short-range communications unit 270 serves as a power-transfer request signal transmitter to transmit a power-transfer request signal to a selected one of the power transmission apparatuses 100. The power-transfer request signal is a signal used to switch an operating mode of the selected power transmission apparatus 100 to a power transfer mode in which the selected power transmission apparatus 100 enables power supply. The power-transfer request signal according to the first embodiment includes location information and ID information on the vehicle CR and ID information. The location information on the vehicle CR included in the power-transfer request signal represents detection of the vehicle CR within a predetermined range around a selected one of power-transmitter dedicated short-range communications units 170, which will be described later, of the selected power transmission apparatus 100 in response to establishment of dedicated short-range communications between the power-receiver dedicated short-range communications unit 270 serving as an RF tag and the selected power-transmitter dedicated short-range communications unit 170 of the selected power transmission apparatus 100. The location information on the vehicle CR is however not limited to the above configuration. Specifically, the location information on the vehicle CR can include first information on an absolute position of the vehicle CR and second information on a relative position of the vehicle CR relative to the selected power transmission apparatus 100.

The ID information on the vehicle CR is identification information on the vehicle CR equipped with the power receiving apparatus 200. The ID information on the vehicle CR can include, for example, identification information on the power receiving coil 212 of the power receiving apparatus 200, or identification information on a user of the power receiving apparatus 200, the combination of the above identification information items, or specific identification information linked to at least one of the above identification information items. The dedicated short-range communications described in the present disclosure mean radio communications within a predetermined first communication range of 5 m or less. The communication range of the dedicated short-range communications can be preferably set to the order of 1 to 100 cm in view of (i) improvement of identification performance of the vehicle CR with respect to the other traveling vehicles, (ii) improvement of electromagnetic compatibility (EMC) of each power transmission apparatus 100, and (iii) reduction in each of unnecessary power consumption and unnecessary magnetic-flux generation due to the other non-selected power transmission resonators 110 being in the non-facing state.

An active radio-frequency-identification (RF-ID) tag, which uses radio waves at 900 MHz frequencies or 2.45 GHz frequences, is employed as the power-receiver dedicated short-range communications unit 270. The RF-ID tag will also be referred to as an RF tag. The active RF-ID tag employed as the power-receiver dedicated short-range communications unit 270 is capable of performing regular communications per unit of time to accordingly generate the power-transfer request signal at regular intervals. A passive RF-ID tag can be employed as the power-receiver dedicated short-range communications unit 270. An electromagnetic-induction RF-ID tag can be employed as the power-receiver dedicated short-range communications unit 270. The power-receiver dedicated short-range communications unit 270 can be configured to establish dedicated short-range communications with a selected power-transmitter dedicated short-range communications unit 170 of the power transmission apparatus 100 in accordance with (i) a near-field wireless communication technology using a loop antenna, such as a near-field wireless communication technology, to which wavelet orthogonal frequency division multiplexing (OFDM) has been applied, based on magnetic fields, or (ii) a bidirectional wireless communication technology, such as a dedicated short-range communication (DSRC) technology using 5.8 GHz frequencies.

The vehicle CR of the first embodiment additionally includes a vehicle information acquiring unit 260 and a vehicle controller 280, and a power-receiver wide-range communications unit 290.

The vehicle controller 280 includes a computer circuit comprised of a CPU and a memory device. The vehicle controller 280 performs overall control of all the components including the power receiving apparatus 200 installed in the vehicle CR. The vehicle controller 280 is configured to perform, in each of an autonomous drive mode and a manual drive mode, various control tasks to accordingly cause the vehicle CR to travel. The memory device stores various computer programs for implementing functions that can be offered by the first embodiment. The CPU of the vehicle controller 280 executes the computer programs stored in the memory device to accordingly implement various functions based on the various control tasks. A part of the vehicle controller 280 can be implemented by a hardware circuit.

The vehicle information acquiring unit 260 is configured to acquire various assistance-information items related to the wireless power transfer system. The vehicle information acquiring unit 260 includes a GNSS receiver 262 and a navigation system 264.

The GNSS receiver 262 is configured to receive navigation signals transmitted from at least one artificial satellite constituting Global Navigation Satellite System (GNSS) and determine, based on the received navigation signals, the current position of the vehicle CR; the current position is comprised of, for example, a current latitude and a current longitude.

The navigation system 264 is operative to determine, based on an inputted destination and the current position of the vehicle CR determined by the GNSS receiver 262, a scheduled travel route from the current position to the destination. The vehicle information acquiring unit 26 can include one or more other sensors, such as a gyro sensor, in addition to the GNSS receiver 262, and can determine the scheduled travel route based on the received navigation signals and information measured by the one or more other sensors or correct the scheduled travel route based on the information measured by the one or more other sensors.

The power-receiver wide-range communications unit 290 is configured to transmit, to a selected power transmission apparatus 100, a request for reservation of the selected power transmission apparatus 100 through wide-range communications. Specifically, the power-receiver wide-range communications unit 290 is configured to transmit, to the selected power transmission apparatus 100, information items required to request reservation of the selected power transmission apparatus 100, which include, for example, the current position and the scheduled travel route of the vehicle CR, and the ID information on the vehicle CR. As the ID information of the vehicle CR included in the reservation request, the ID information transmitted by the power-receiver dedicated short-range communications unit 270 is for example used.

The wide-range communications mean radio communications within a predetermined communication range wider than the communication range of the dedicated short-range communications described later. The wide-range communications can be implemented by, for example, (i) a mobile communication system, such as the fifth generation mobile communication system (5G, local 5G), the fourth generation mobile communication system (LTE-Advanced or 4G), or LTE, or (ii) wireless communications based on, for example, wireless local area network using the wireless local network (LAN) in conformity with one of various wireless communication standards or Bluetooth^{®}. Wireless communications of the power receiving apparatus 200 with the power transmission apparatus 100 include indirect wireless communications through base stations and/or servers.

The power transmission apparatus 100 provided for each power transmission section according to the first embodiment additionally includes a corresponding one of the power-transmitter dedicated short-range communications units 170. The power transmission apparatuses 100 include a power-transmitter controller 180 and a power-transmitter wide-range communications unit 190 shared by the power transmission apparatuses 100.

The power-transmitter wide-range communications unit 190 is configured to receive the reservation request transmitted from the vehicle CR through the wide-area communications. Information acquired by the power-transmitter wide-range communications unit 190 is outputted to the power-transmitter controller 180.

The power-transmitter controller 180 includes a computer circuit comprised of a CPU and a memory device.

The power-transmitter controller 180 is configured to perform control of each power transmission apparatus 100 among a cutoff mode, a standby mode, and the power transfer mode. Specifically, for a selected power transmission apparatus 100, the power-transmitter controller 180 is configured to change, based on the information received through the power-transmitter wide-range communications unit 190 from the vehicle CR, the input impedance of each power transmission resonator 110 to accordingly change a value of current flowing through the corresponding power transmission coil 112. This enables the selected power transmission apparatus 100 to be switched between the cutoff mode and the standby mode. The cutoff mode of each power transmission apparatus 100 represents that the corresponding power transmission circuit 130 is deactivated so that power supply is cut off from the corresponding power transmission circuit 130 to the corresponding power transmission resonators 110.

The standby mode of each power transmission apparatus 100 represents that the corresponding power transmission circuit 130 is activated but no power supply is carried out from the corresponding power transmission apparatus 100 to the power receiving apparatus 200. In the standby mode of a selected power transmission apparatus 100, the power-transmitter controller 180 changes the input impedance Z1 of each power transmission resonator 110 to be larger, resulting in the small standby coil current flowing through each power transmission coil 112 of the selected power transmission apparatus 100.

The power-transmitter dedicated short-range communications unit 170 included in each power transmission apparatus 100 serves as an interface that acquires, for example, the power-transfer request signal transmitted from the receiver dedicated short-range communications unit 270 and changes, under control of the power-transmitter controller 180, the input impedance Z1 of each power transmission resonator 110 based on the power-transfer request signal.

The power-transmitter dedicated short-range communications unit 170 includes, as illustrated in Fig. 1, a receiver 172 and a switching unit 174.

The receiver 172 is configured to receive, for example, the power-transfer request signal transmitted from the receiver dedicated short-range communications unit 270. As the receiver 172, a reader configured to be in conformity with a radio-communication method used by the receiver dedicated short-range communications unit 270. The first embodiment employs an RF reader as the receiver 172. A receiving device configured to be in conformity with the near-field wireless communication system using a loop antenna.

The switching unit 174 is configured to switchably set a coil current flowing through a selected power transmission resonator 110 included in the corresponding power transmission apparatus 100 to one of controlled values. Specifically, the switching unit 174 is configured to, when the receiver 172 receives the power-transfer request signal transmitted from the receiver dedicated short-range communications unit 270, control, for example, a switching circuit installed in a selected power transmission resonator 110 to thereby change the input impedance Z1 of the selected power transmission resonator 110. This change of the input impedance Z1 of the selected power transmission resonator 110 switches a value of the coil current flowing through the power transmission coil 112 to a controlled value enabled to transfer power from the power transmission coil 112 to the power receiving apparatus 200.

The switching unit 174 according to the first embodiment may be for example arranged to be adjacent to the power transmission coil 112 of a selected power transmission resonator 110 and may be integrated with the power transmission coil 112. The receiver 172 serves as a power-transfer request signal receiver configured to receive the power-transfer request signal.

The power-transmitter dedicated short-range communications unit 170 provided for the power transmission apparatus 100 included in the first power transmission section SC1 according to the first embodiment is, as illustrated in Fig. 1, arranged adjacent to one of the four power transmission resonators 110P, 110Q, 110R, and 110S. Specifically, the power-transmitter dedicated short-range communications unit 170 is arranged adjacent to one of the power transmission resonator 110P and the power transmission resonator 110S that are respectively arranged at both ends of the first power transmission section SC1. In other words, the power transmission resonator 110P and the power transmission resonator 110S are respectively arranged at both ends of the alignment of the four power transmission resonators 110P, 110Q, 110R, and 110S that constitute the first power transmission section SC1. The power transmission coils 112 included in the respective power transmission resonators 110P and 110S arranged at both ends of the first power transmission section SC1 will also be referred to as end coils 112.

Specifically, in the example illustrated in Fig. 1, the power transmission resonators 110P and 110S in the four power transmission resonators 110P, 110Q, 110R, and 110S aligned in series in the first power transmission section SC1 correspond to the power transmission resonators 110 respectively arranged at both ends of the first power transmission section SC1.

The power-transmitter dedicated short-range communications unit 170 provided for the first power transmission section SC1 according to the first embodiment is arranged only adjacent to the end coil 112P selected from the end coils 112P and 112Q; the end coil 112P is the coil with which, when the vehicle CR is traveling along a traveling route in the vehicle traveling road RS, the traveling route intersects first assuming that the traveling route overlaps the first power transmission section SC1.

It is preferable to detect, with high accuracy, the approaching of the vehicle CR to the end coil 112P in view of (i) improvement of identification performance of each vehicle CR with respect to the other traveling vehicles, (ii) improvement of electromagnetic compatibility (EMC) of each power transmission apparatus 100, and (iii) reduction in each of unnecessary power consumption and unnecessary magnetic-flux generation due to the other non-selected power transmission resonators 110 being in the non-facing state. For these requirements, the power-transmitter dedicated short-range communications unit 170 provided for the first power transmission section SC1 is preferably arranged as close as possible to the location of the end coil 112P, more preferably arranged such that coordinates of the receiver 172 and coordinates of the end coil 112P in the X, Y, and Z coordinate system overlap each other in plan view. For example, the receiver 172 can be arranged in a surface of the end coil 112P.

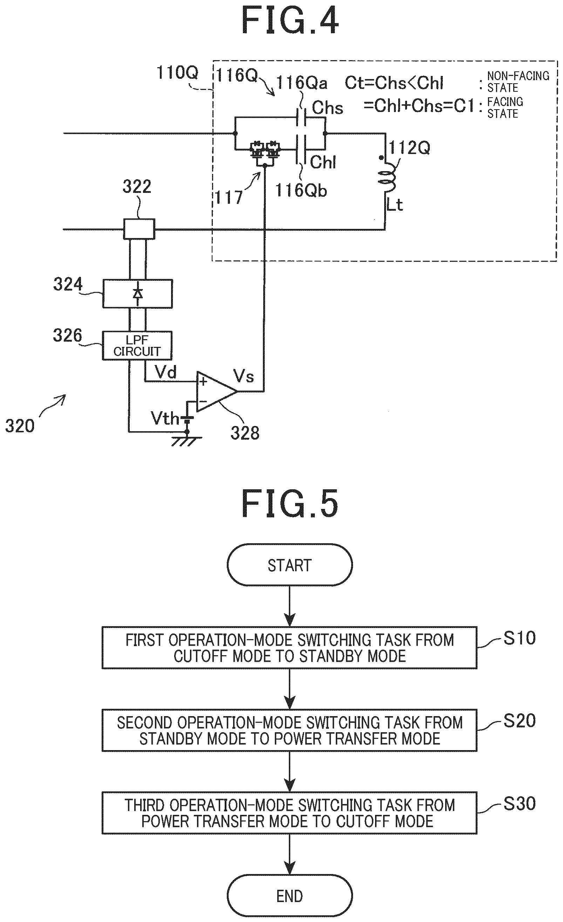

The following describes how to switchably set a value of the coil current flowing through each of the power transmission resonators 110P and 110Q to one of controlled values with reference to Figs. 3 and 4.

The power transmission resonance capacitor unit 116P of the power transmission resonator 110P including the end coil 112P is configured, as illustrated in Fig. 3, as a capacitor unit that includes at least first and second resonance capacitors 116Pa and 116Pb and a bidirectional switch circuit 117. Fig. 3 illustrates, from the components of the power transmission apparatus 100 included in the first power transmission section SC1 illustrated in Fig. 2, only the power transmission resonator 110P and the power-transmitter dedicated short-range communications unit 170 in addition to a current sensor 310 for facilitating understanding of the technology implemented by the power transmission resonance capacitor unit 116P, and therefore illustration of the other components of the power transmission apparatus 100 is omitted in Fig. 3.

The power-transmitter dedicated short-range communications unit 170 is configured to change the input impedance Z1 of the power transmission resonator 110P using the power transmission resonance capacitor unit 116P. Specifically, the switching unit 174 of the power-transmitter dedicated short-range communications unit 170 is configured to control on/off operations of the bidirectional switch 117 to accordingly change the capacitance across the power transmission resonance capacitor 116P, thus changing the input impedance Z1 of the power transmission resonator 110P.

Specifically, the power transmission resonance capacitor unit 116P includes, as illustrated in Fig. 3, the first and second resonance capacitors 116Pa and 116Pb arranged in parallel to each other, and the second resonance capacitor 116Pb is connected in series to the bidirectional switch circuit 117. That is, turning on the **bidirectional** switch circuit 117 enables the second resonance capacitor 116Pb to be connected in parallel to the first resonance capacitor 116Pa, and turning off the bidirectional switch circuit 117 enables the second resonance capacitor 116Pb to be separated from the first resonance capacitor 116Pa. That is, the capacitance Ct across the power transmission resonance capacitor unit 116P becomes a capacitance Chs across the first resonance capacitor 116Pa upon the bidirectional switch circuit 117 being off, and the capacitance Ct across the power transmission resonance capacitor unit 116P becomes the sum of the capacitance Chs and a capacitance Chl across the second resonance capacitor 116Pb upon the bidirectional switch circuit 117 being on; the sum of the capacitance Chs and the capacitance Chl will be referred to as (Chs + Chl).

The switching unit 174 is configured to switch the bidirectional switch circuit 117 between the on state and the off state in accordance with the ID information and the power-transfer request signal received by the receiver 172. The switching of the bidirectional switch circuit 117 between the on state and the off state enables the capacitance Ct across the power transmission resonance capacitor unit 116P being changed. That is, when the receiver 172 receives the power-transfer request signal, the switching unit 174 turns on the bidirectional switch circuit 117 to accordingly change the input impedance Z1 of the power transmission resonator 110P to a small value Z1r (that is, Z1 = Z1r). This enables power transfer from the power transmission resonator 110P to the power receiving apparatus 200 to be started. The state in which starting of power transfer from the power transmission apparatus 100 to the power receiving apparatus 200 is enabled will be referred to as a power transfer mode of the power transmission apparatus 100.

When the power transmission coil 112 of any power transmission resonator 110 is in the non-facing state in which the power receiving coil 212 does not face the power transmission coil 112, the switching unit 174 turns off the bidirectional **switch** circuit 117 of the power transmission resonator 110 to accordingly change the input impedance Z1 of the power transmission resonator 110P to a large value Z1n larger than the small value Z1r (that is, Z1 = Z1n > Z1r). This results in there being no power transfer from the power transmission resonator 110 to the power receiving apparatus 200, so that the power transmission resonator 110 is in the standby mode.

The power-transmitter dedicated short-range communications unit 170 is, as illustrated in Fig. 1, connected to the current sensor 310. The switching unit 174 can be configured to determine whether a value of the coil current flowing through the current sensor 310, i.e., through the power transmission coil 112P, is smaller than or equal to a predetermined first threshold value. Then, the switching unit 174 can be configured to turn off the bidirectional switch circuit 117 to accordingly stop power transfer from the power transmission coil 112P to the power receiving coil 212 upon determination that the power receiving coil 212 and the power transmission coil 112P are in the non-facing state so that the value of the coil current flowing through the current sensor 310, i.e., through the power transmission coil 112P, is smaller than or equal to the predetermined first threshold value. The switching unit 174 can be configured to detect loss of short-range communications between the receiver 172 of the power-transmitter dedicated short-range communications unit 170 and the receiver dedicated short-range communications unit 270 to accordingly turn off the bidirectional switch circuit 117, thus stopping power supply from the power transmission coil 112P to the power receiving coil 212. The current sensor 310 serves as an example of a power-transmitter measurement circuit.

The power transmission resonance capacitor unit 116Q of the power transmission resonator 110Q located adjacent to the power transmission resonator 110P is configured, as illustrated in Fig. 4, as a capacitor unit that includes at least first and second resonance capacitors 116Qa and 116Qb and a bidirectional switch circuit 117. The power transmission apparatus 100 included in the first power transmission section SC1 includes a variable control circuit 320. The variable control circuit 320 is configured to change the input impedance Z1 of the power transmission resonator 110Q using the power transmission resonance capacitor unit 116Q. Because the configuration of the power transmission resonance capacitor unit 116Q is identical to that of the power transmission resonance capacitor unit 116P, description of the configuration of the power transmission resonance capacitor unit 116Q is omitted.

The variable control circuit 320 is configured to control the capacitance C1 across the power transmission resonance capacitor unit 116Q in accordance with how the power receiving coil 212 faces the power transmission coil 112Q. Specifically, the variable control circuit 320 includes a current sensor 322, a rectifier 324, a low-pass filter (LPF) circuit 326, and a voltage converter 328. Hereinafter, the end coil 112P and the power transmission coils 112Q, 112R, and 112S will also be collectively referred to simply as power transmission coils 112 if it is unnecessary to identify any of the power transmission coils 112.

The current sensor 322 is configured to measure a value of the coil current flowing through the power transmission coil 112Q and output the measured value of the coil current as a measurement voltage related to the measured value of the coil current. The value of the coil current measured by the current sensor 322 is a very small value upon the power receiving coil 212 being in the non-facing state with respect to the power transmission coil 112Q, and gradually increases as the power receiving coil 212 approaches the power transmission coil 112Q to be in the completely facing state with respect to the power transmission coil 112Q. The measurement voltage changes depending on the value of the coil current measured by the current sensor 322. The variable control circuit 320 can be configured to determine whether the measurement voltage outputted from the current sensor 322 based on the value of the coil current flowing through the current sensor 322 is smaller than or equal to a predetermined second threshold **value and** turn off the bidirectional switch circuit 117 to accordingly stop power transfer from the power transmission coil 112Q to the power receiving coil 212 upon determination that the measurement voltage is smaller than or equal to the predetermined second threshold value. The current sensor 322 is an example of a power-transmitter measurement circuit.

The rectifier 324 is configured to rectify the measurement voltage. The LPF circuit 326 is configured to remove high-frequency components contained in the measurement voltage to accordingly output a measurement voltage Vd from which the high-frequency components have been removed. The voltage converter 328 is comprised of a comparator and configured to determine whether the measurement voltage Vd is higher than or equal to a threshold voltage Vth. Then, the voltage converter 328 is configured to output different levels of a control voltage Vs depending on whether the measurement voltage Vd is more than or equal to the threshold voltage Vth.

The voltage converter 328 is configured to output a turn-off level of the control voltage Vs to the bidirectional switch circuit 117 to turn off the bidirectional switch circuit 117 upon determination that the power receiving coil 212 is in the non-facing state with respect to the power transmission coil 112Q so that the measurement voltage Vd is lower than the threshold voltage Vth. This results in the input impedance Z1 of the power transmission resonator 110Q being the large value Z1n larger than the small value Z1r (that is, Z1 = Z1n > Z1r). This results in, like the power transmission resonator 110P, no power transfer from the power transmission resonator 110Q to the power receiving apparatus 200.

In contrast, the voltage converter 328 is configured to output a turn-on level of the control voltage Vs to the bidirectional switch circuit 117 to turn on the bidirectional switch circuit 117 upon determination that the power receiving coil 212 is in the facing state with respect to the power transmission coil 112Q so that the measurement voltage Vd is higher than or equal to the threshold voltage Vth. This results in the input impedance Z1 of the power transmission resonator 110Q being the small value Z1r (that is, Z1 = Z1r). This results in, like the power transmission resonator 110P, power transfer being started from the power transmission resonator 110Q to the power receiving apparatus 200.

The capacitance Ct across the power transmission resonance capacitor unit 116Q becomes the capacitance Chs across the first resonance capacitor 116Qa upon the bidirectional switch circuit 117 being off, and the capacitance Ct across the power transmission resonance capacitor unit 116Q becomes the sum (Chs + Chl) of the capacitance Chs and the capacitance Chl across the second resonance capacitor 116Qb upon the bidirectional switch circuit 117 being on. The capacitance Chs and the capacitance Chl can be determined such that
(I) The capacitance Ct across the power transmission resonance capacitor unit in the facing state, which is set to the sum (Chs + Chl) of the capacitance Chs and the capacitance Chl, becomes the resonance capacitance C1
(II) The capacitance Ct across the power transmission resonance capacitor unit in the non-facing state, which is set to the capacitance Chs, is smaller than the resonance capacitance C1 and the capacitance Chs is smaller than the capacitance Chl

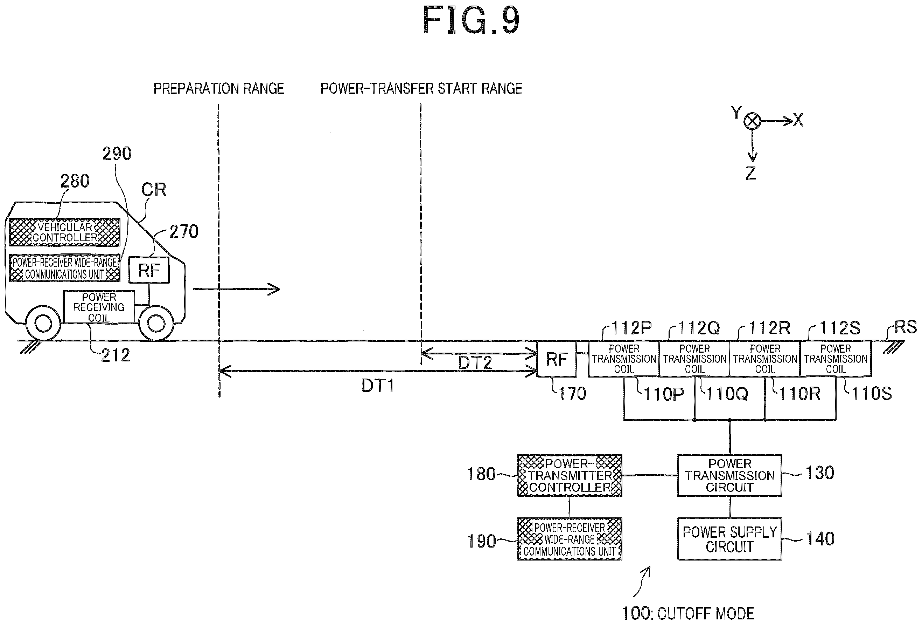

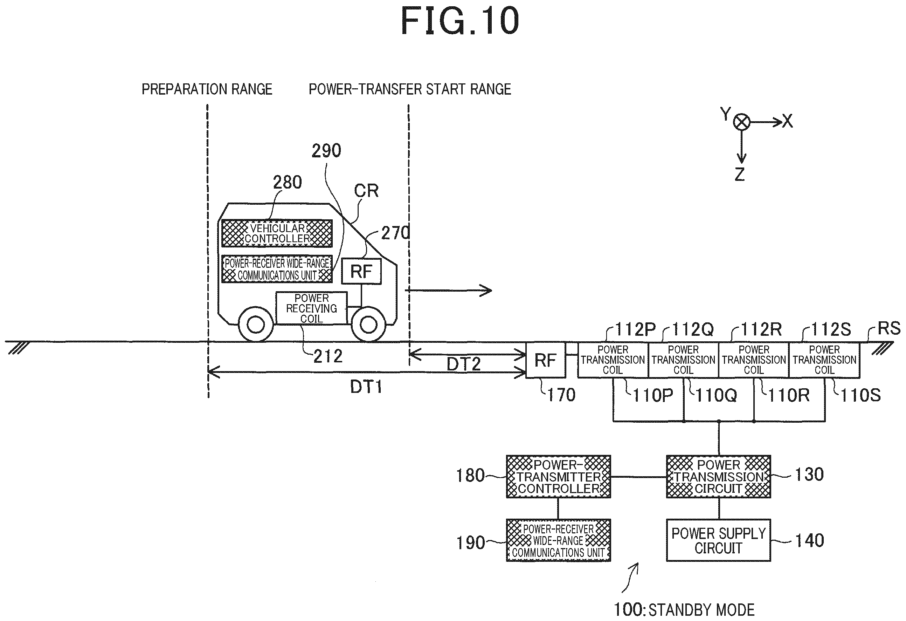

Next, the following describes a mode switching routine carried out by the power transmission apparatus 100 included in the first power transmission section SC1 with reference to Figs. 5 to 14. Figs. 9 to 14 illustrate a series of movement of the vehicle CR equipped with the power receiving apparatus 200 from a state where the vehicle CR is traveling toward the first power transmission section SC1 up to a state where the vehicle CR has passed through the first power transmission section SC1. In each of Figs. 9 to 14, the power-transmitter dedicated short-range communications unit 170 is illustrated to be separated from the end coil 112P for the sake of simple illustration, but the coordinates of the power-transmitter dedicated short-range communications unit 170 and the coordinates of the end coil 112P in the X, Y, and Z coordinate system overlap each other in plan view. For the sake of easy understanding of the technologies illustrated in Figs. 9 to 14, one or more components whose functions are active are hatched. Additionally, for the sake of simple illustration, the names of some of the components are abbreviated.

Each of Figs. 9 to 14 schematically illustrates (i) a power-transfer start range DT2 from the end coil 112P of the power transmission apparatus 100 and (ii) a preparation range DT1 from the end coil 112P of the power transmission apparatus 100. The power-transfer start range DT2 can represent a range such that, when the receiver dedicated short-range communications unit 270 of the power receiving apparatus 200 is located within the range from the power-transmitter dedicated short-range communications unit 170, the power-transfer request signal transmitted from the receiver dedicated short-range communications unit 270 can be received by the power-transmitter dedicated short-range communications unit 170. The power-transfer start range DT2 according to the first embodiment can be set to 100 cm as the communication range of the receiver dedicated short-range communications unit 270. The preparation range DT1 is a range longer than the power-transfer start range DT2, and defines that, when the vehicle CR is located within the range from the power-transmitter dedicated short-range communications unit 170, the power transmission apparatus 100 is shifted to a power-transfer preparation state. The preparation range DT1 can be set to a distance that is enough to shift the power transmission circuit 130 of the first power transmission section SC1 into the standby mode while the vehicle CR is traveling by a difference distance (DT2 - DT1), which is calculated by subtracting the power-transfer start range DT2 from the preparation range DT1. For example, the preparation range DT1 can be derived from (i) time required for the power transmission circuit 130 to be shifted into the preparation state and (ii) a separation distance between the vehicle CR and the power transmission apparatus 100, and (iii) the traveling speed of the vehicle CR.

A mode switching routine from the power transmission apparatus 100 to the power receiving apparatus 200 includes, as illustrated in Fig. 5, a first operation-mode switching task of switching the operation mode of the power transmission apparatus 100 of the first power transmission section SC1 from the cutoff mode to the standby mode in step S10.

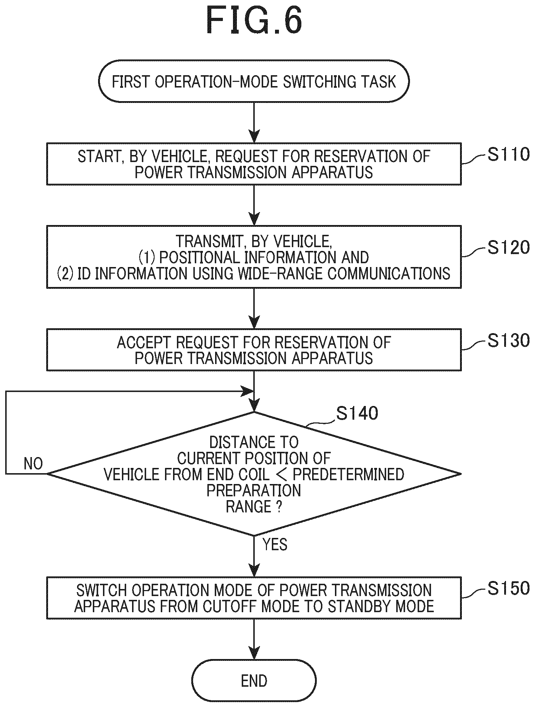

Specifically, the vehicle CR starts to transmit, to the power transmission apparatus 100 of the first power transmission section SC1, the request for reservation of the power transmission apparatus 100 in step S110 of Fig. 6. The request for reservation of the power transmission apparatus 100 of the first power transmission section SC1 means a request, to the power transmission apparatus 100 or a manager of the power transmission apparatus 100, of using the power transmission apparatus 100 of the first power transmission section SC1 for power transfer from the power transmission apparatus 100 to the power receiving apparatus 200. The vehicle controller 280 can transmit, to the power transmission apparatus 100 of the first power transmission section SC1, the request for reservation of the power transmission apparatus 100 of the first power transmission section SC1 when having received information that the first power transmission section SC1 is included in the scheduled travel route of the vehicle CR generated by the navigation system 264. Alternatively, a user of the vehicle CR can manually apply, to the power transmission apparatus 100 of the first power transmission section SC1, reservation of the power transmission apparatus 100 of the first power transmission section SC1. In addition, when detecting that the vehicle CR is located within a predetermined range from the power transmission apparatus 100 of the first power transmission section SC1 based on the location information on the vehicle CR, the power transmission apparatus 100 can receive or accept reservation of the power transmission apparatus 100 from the vehicle CR independently of whether the request for reservation of the power transmission apparatus 100 of the first power transmission section SC1 is transmitted from the vehicle CR.

The vehicle controller 280 can transmit, to the power transmission apparatus 100 of the first power transmission section SC1, the request for reservation of the power transmission apparatus 100 of the first power transmission section SC1 in accordance with the state of charge of the battery 230. For example, the vehicle controller 280 can transmit, to the power transmission apparatus 100 of the first power transmission section SC1, the request for reservation of the power transmission apparatus 100 of the first power transmission section SC1 in response to determination that the SOC of the battery 230 is lower than a predetermined threshold.

In addition to starting of the request for reservation of the power transmission apparatus 100 of the first power transmission section SC1, the vehicle controller 280 of the vehicle CR transmits, to the power transmission apparatus 100, the current position of the vehicle CR and the ID information on the vehicle CR through the power-receiver wide-range communications unit 290 in step S120 (see Fig. 9). The vehicle controller 280 can be configured to periodically transmit the current position of the vehicle CR and the ID information on the vehicle CR to the power transmission apparatus 100 every predetermined time after the request for reservation of the power transmission apparatus 100. The position information on the vehicle CR to be transmitted through wide-range communications is the position information on the vehicle CR obtained by the GNSS receiver 262 or the navigation system 264, but not limited thereto. Specifically, the position information on the vehicle CR to be transmitted through wide-range communications can include (i) information indicative of detection of the vehicle CR within a predetermined range from the power-transmitter wide-range communications unit 190 in response to establishment of wide-range communications between the wide-range communications units 190 and 290 and/or (ii) the relative position of the vehicle CR relative to the power-transmitter wide-range communications unit 190.

When the power-transmitter wide-range communications unit 190 of the power transmission apparatus 100 receives the current position of the vehicle CR and the ID information on the vehicle CR, the power-transmitter controller 180 accepts the request for reservation of the power transmission apparatus 100 by the vehicle CR, and stores the ID information on the vehicle CR in the memory device thereof in step S130.

Next, the power-transmitter controller 180 determines, based on the current position information on the vehicle CR, whether the vehicle CR has arrived at a position within the preparation range DT1 from the end coil 112P in step S140.

In response to determination that the distance to the current position of vehicle CR from the end coil 112P is greater than or equal to the preparation range DT1 (NO in step S140), the power-transmitter controller 180 continuously obtains the current position information on the vehicle CR to accordingly wait until the vehicle CR has arrived at a position within the preparation range DT1 from the end coil 112P.

Otherwise, in response to determination that the distance to the current position of vehicle CR from the end coil 112P is smaller than the preparation range DT1 (YES in step S140), the power controller 180 activates the power transmission circuit 130 to switch the operation mode of the power transmission apparatus 100 from the cutoff mode to the standby mode in step S150, and thereafter completes the first operation-mode switching task in step S10.

Following the operation in step S10, the mode switching routine includes a second operation-mode switching task of switching the operation mode of the power transmission apparatus 100 of the first power transmission section SC1 from the standby mode to the power transfer mode in step S20 of Fig. 5.

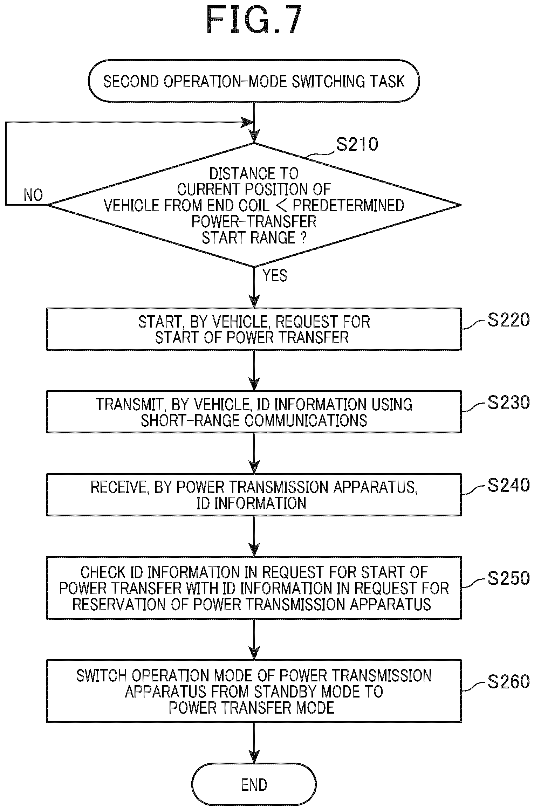

Specifically, the power controller 180 determines, based on the current position information on the vehicle CR, whether the vehicle CR has arrived at a position within the power-transfer start distance DT2 from the end coil 112P in step S210 of Fig. 7.

In response to determination that the distance to the current position of vehicle CR from the end coil 112P is longer than or equal to the power-transfer start distance DT2 (NO in step S210), the power-transmitter controller 180 continuously obtains the current position information on the vehicle CR to accordingly wait until the vehicle CR has arrived at a position within the power-transfer start distance DT2 from the end coil 112P.

Otherwise, in response to determination that the distance to the current position of vehicle CR from the end coil 112P is smaller than the power-transfer start distance DT2 (YES in step S210), the second operation-mode switching task proceeds to step S220.

In step S220, the vehicle controller 280 starts to request for start of power transfer in response to receiving a request sent from the power transmission apparatus 100 through the power-transmitter dedicated short-range communications unit 170. The vehicle controller 280 can start to request for start of power transfer in response to detection that the current position of the vehicle CR has arrived at a position within the power-transfer start distance DT2. Next, the vehicle controller 280 transmits, to the power transmission apparatus 100, the current position of the vehicle CR and the ID information on the vehicle CR as the request for start of power transfer, through the power-receiver short-range communications unit 270 after establishment of short-range communications between the short-range communications units 170 and 270 in step S230.

Following operation in step S230, the receiver 172 of the power-transmitter dedicated short-range communications unit 170 receives the position information on the vehicle CR and the ID information on the vehicle CR transmitted from the power-receiver short-range communications unit 270 in step S240. Then, the power controller 180 checks the ID information on the vehicle CR stored in the memory device during accepting of the request for reservation of the power transmission apparatus 100 with the ID information on the vehicle CR received through the power-receiver short-range communications unit 270 in step S250.

In response to determination as a check result that the ID information on the vehicle CR stored in the memory device matches the ID information on the vehicle CR received through the power-receiver short-range communications unit 270, the power controller 180 gives permission to start of power transfer, so that the second operation-mode switching task proceeds to step S260.

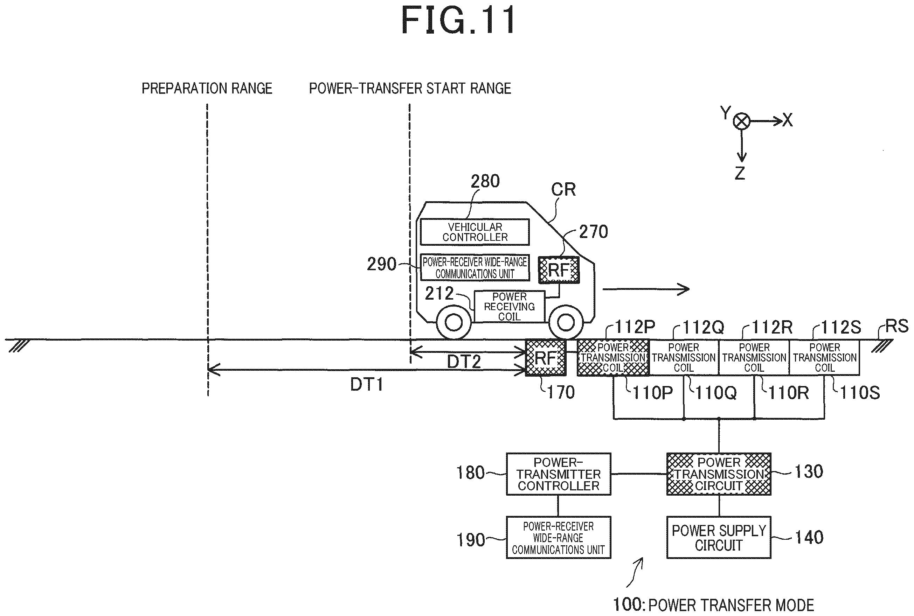

When moving in the X-axis direction as the traveling direction, the vehicle CR can pass through the end coil 112P first (see Fig. 11). The vehicle CR transmits, to the power transmission apparatus 10 of the first power transmission section SC1, the position information on the vehicle CR through the power-receiver short-range communications unit 270, that is, information that the vehicle CR is approaching the end coil 112P, and completes the request for start of power transfer using the ID information.

In step S260, the power controller 180 switches the operation mode of the power transmission apparatus 100 from the standby mode to the power transfer mode. Specifically, the power controller 180 controls the switching unit 174 to turn on the bidirectional switch circuit 117 of the power transmission resonator 110P corresponding to the end coil 112P. This changes the input impedance Z1 of the power transmission resonator 110P to the small value Z1r, resulting in a large power-supply coil current flowing through the end coil 112P. Thereafter, the power controller 180 terminates the second operation-mode switching task.

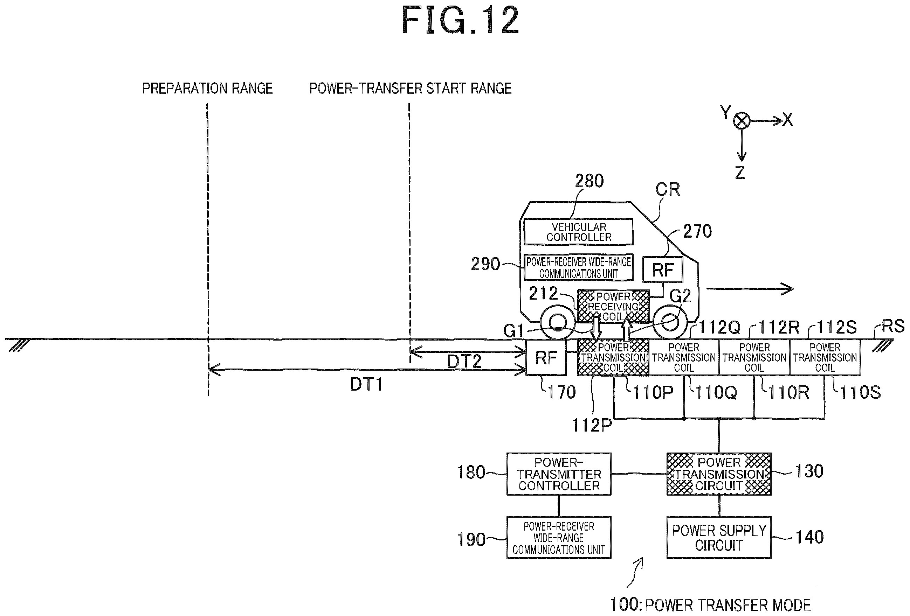

As illustrated in Fig. 12, the vehicle CR, which has completed the request for start of power transfer while traveling, has arrived at a position over the end coil 112P through which the power-transfer coil current is flowing. When the power receiving coil 212 approaches the end coil 112P so as to be in the facing state with respect to the end coil 112P, magnetic flux induced from magnetic flux G2 generated by the end coil 112P causes magnetic flux G1 to be induced through the power receiving coil 212 due to resonance between the coils 112P and 212, resulting in the power receiving coil 212 and the end coil 112P being magnetically coupled with each other. This results in power transfer from the power transmission apparatus 100 to the power receiving apparatus 200 being started.

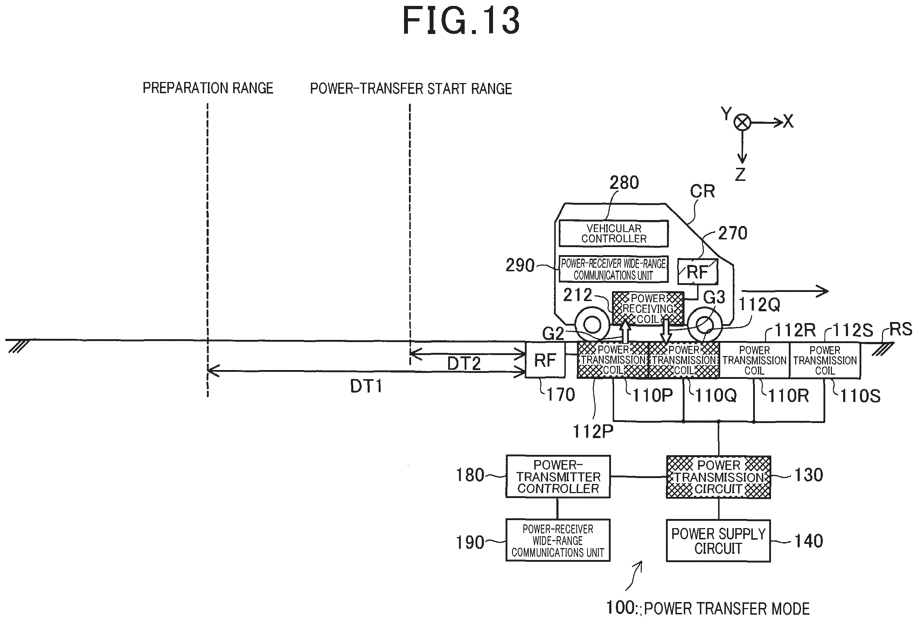

Further traveling of the vehicle CR results in, as illustrated in Fig. 13, after start of the power transfer based on the magnetic coupling between the magnetic flux G1 induced through the power receiving coil 212 and the magnetic flux G2 generated by the end coil 112P, magnetic flux G3 from the power receiving coil 212 causing a current to flow through the power transmission coil 112Q located adjacent to the end coil 112P. The variable control circuit 320 of the power transmission resonator 110Q measures the current flowing through the power transmission coil 112Q, and turns on the bidirectional switch circuit 117 of the power transmission resonator 110Q. This results in the input impedance Z1 of the power transmission resonator 110Q being the small value Z1r. This results in a large power-transfer current flowing through the power transmission coil 112Q, so that magnetic coupling between the power transmission coil 112Q located adjacent to the end coil 112P and the power receiving coil 212 causes power transfer being started from the power transmission resonator 110Q to the power receiving apparatus 200. As described above, after power transfer from the end coil 112P and the power receiving coil 212 of the vehicle CR is started in the first power transmission section SC1, the power transmission coil 112Q located adjacent to the end coil 112P, the power transmission coil 112R, and the power transmission coil 112S enable start of power transfer therefrom to the power receiving coil 212 without using short-range communications.

The mode switching routine includes a third operation-mode switching task of switching the operation mode of the power transmission apparatus 100 of the first power transmission section SC1 from the power transfer mode to the cutoff mode in step S30 of Fig. 5, and after completion of the operation in step S30, the mode switching routine is completed.

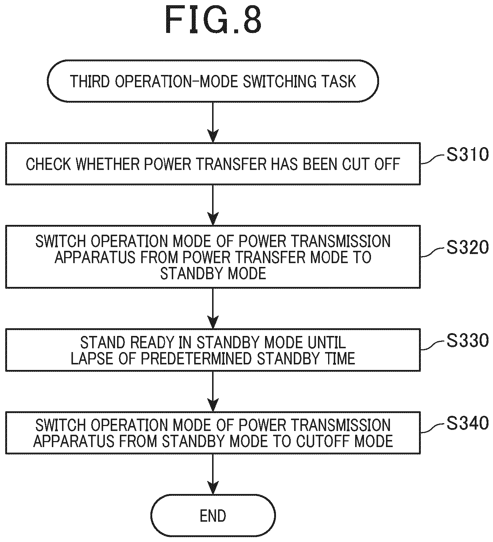

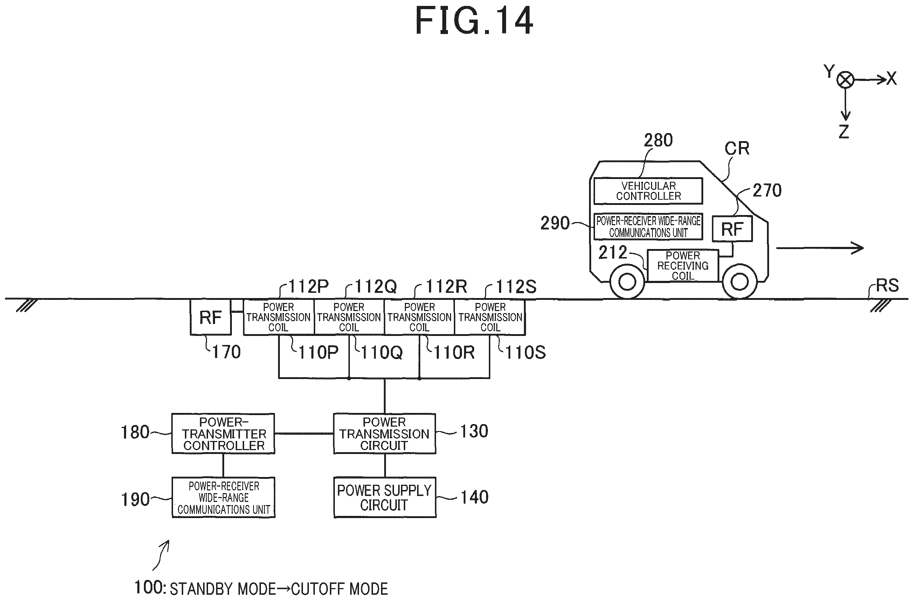

Specifically, the power controller 180 checks whether power transfer from the first power transmission section SC1 has been cut off in step S310 of Fig. 8. As an example illustrated in Fig. 14, the power controller 180 checks whether power transfer from each of the power transmission resonators 110 included in the first power transmission section SC1 has been cut off in step S310 of Fig. 8.

For example, the power controller 180 checks whether a value of the coil current flowing through the power transmission coil 112 of each power transmission resonator 110 included in the first power transmission section SC1 is smaller than a value of the coil current flowing therethrough in the power transfer mode. Specifically, the power controller 180 checks whether a current value measured by the current sensor 310 connected to the end coil 112P is smaller than or equal to the predetermined first threshold value and checks whether a current value measured by the current sensor 322 connected to each of the power transmission coils 112Q, 112R, and 112S is smaller than or equal to the predetermined second threshold value. Then, the power controller 180 determines that power transfer from all the power transmission resonators 110 included in the first power transmission section SC1 has been cut off in step S310 upon determination that (i) the current value measured by the current sensor 310 connected to the end coil 112P is smaller than or equal to the predetermined first threshold value and (ii) the current value measured by the current sensor 322 connected to each of the power transmission coils 112Q, 112R, and 112S is smaller than or equal to the predetermined second threshold value.

When the power receiving apparatus 200 of the vehicle CR is separated, due to traveling of the vehicle CR, from the power transmission apparatus 100 **included** in the first power transmission section SC1 by a distance greater than the communication range of the receiver dedicated short-range communications unit 270 with respect to the power-transmitter dedicated short-range communications unit 170, the power-transmitter dedicated short-range communications unit 170 cannot receive the power-transfer request signal from the vehicle CR.

For this reason, the power controller 180 can be modified to determine that power transfer from all the power transmission resonators 110 included in the first power transmission section SC1 has been cut off in step S310 in response to detection that the power-transmitter dedicated short-range communications unit 170 cannot receive the power-transfer request signal from the vehicle CR. This modification enables elimination of the current sensor 310 connected to the end coil 112P of the power transmission resonator 110P, making it possible to reduce the number of components of the power transmission apparatus 100 included in the first power transmission section SC1.

Upon determination that power transfer from all the power transmission resonators 110 included in the first power transmission section SC1 has been cut off in step S310, the power controller 180 switches the operation mode of the power transmission apparatus 100 included in the first power transmission section SC1 from the power-transfer mode to the standby mode in step S320.

Specifically, when the current value measured by the current sensor 310 connected to the end coil 112P is smaller than or equal to the predetermined first threshold value, the power controller 180 turns off the bidirectional switch circuit 117 of the power transmission resonator 110P to accordingly change the input impedance Z1 of the power transmission resonator 110P to the large value Z1n larger than the small value Z1r (that is, Z1 = Z1n > Z1r). This results in a value of current flowing through the power transmission coil 112P being switched to be smaller than the value of current enabled to transfer power from the power transmission coil 112P to the power receiving apparatus 200. Similarly, when the current value measured by the current sensor 320 connected to each of the power transmission coils 112Q, 112R, and 112S is smaller than or equal to the predetermined second threshold value, the power controller 180 turns off the bidirectional switch circuit 117 of each of the power transmission resonators 110Q, 110R, and 110S to accordingly switch a value of current flowing through each of the power transmission resonators 110Q, 110R, and 110S to a value smaller than the value of current enabled to transfer power from the corresponding one of the power transmission resonators 110Q, 110R, and 110S to the power receiving apparatus 200. This results in the operation mode of the power transmission apparatus 100 included in the first power transmission section SC1 being switched from the power-transfer mode to the standby mode.

Following the operation in step S320, the power controller 180 uses an unillustrated timer to start counting time in response to the operation mode of the power transmission apparatus 100 included in the first power transmission section SC1 being switched from the power-transfer mode to the standby mode, and stands ready in the standby mode until the counted time reaches a predetermined standby time in step S330. The standby time can be freely determined in consideration of, for example, traffic conditions of the first power transmission section SC1, such as traveling frequencies of vehicles passing through the first power transmission section SC1.

The standby time can be varied based on significant factors contributing to the traveling frequencies of vehicles passing through the first power transmission section SC1. For example, the significant factors may include (i) whether the first power transmission section SC1 is used during a predetermined nighttime or a predetermined daytime, (ii) whether the first power transmission section SC1 is used during a weekday or a holiday, or (iii) in which of the seasons the first power transmission section SC1 is used.

In response to determination that the counted time reaches the predetermined standby time, the power controller 180 deactivates the power transmission circuit 130 corresponding to the power transmission apparatus 100 included in the first power transmission section SC1 to accordingly switch the operation mode of the power transmission apparatus 100 included in the first power transmission section SC1 from the standby mode to the cutoff mode, and thereafter terminates the third operation-mode switching task. Alternatively, the power controller 180 can switch the operation mode of the power transmission apparatus 100 included in the first power transmission section SC1 from the standby mode to the cutoff mode to accordingly terminate the third operation-mode switching task in response to detecting loss of wide-range communications between the power-transmitter wide-range communications unit 190 of the power transmission apparatus 100 and the power-receiver wide-range communications unit 290 of the vehicle CR.

As described above, the power transmission apparatus 100 provided in each power transmission section includes at least one power transmission resonator 110 comprised of at least one power transmission coil 112 and at least one power transmission resonance capacitor unit 116, the power transmission circuit 130, the receiver 172, and the switching unit 174. The power transmission circuit 130 is configured to supply AC power to the at least one power transmission resonator 110, and the receiver 172 serves as a power-transfer request signal receiver configured to receive the power-transfer request signal transmitted from the power receiving apparatus 200. The switching unit 174 is configured to switch a current flowing through the at least one power transmission coil 112 to one of controlled values.

Specifically, the switching unit 174 is configured to switch a current flowing through the at least one power transmission coil 112 to a power-transferable value enabled to transfer power from the at least one power transmission coil 112 to the power receiving apparatus 200 in response to receiving the power-transfer request signal transmitted from the power receiving apparatus 200. This configuration therefore more reliably switches the operation mode of the power transmission apparatus 100 to the power transfer mode that enables power transfer from the power transmission apparatus 100 to the power receiving apparatus 200 as compared with a case where using magnetic-flux change induced in the at least one power transmission coil 110 switches the operation mode of the power transmission apparatus 100 to the power transfer mode. This configuration therefore reduces or prevents the occurrence of glitches, such as there being no power transfer from the power transmission apparatus 100 to the power receiving apparatus 200 with the power receiving coil 212 being changed from the non-facing state to the facing state with respect to the at least one power transmission coil 112.

The switching unit 174 of the power transmission apparatus 100 provided in each power transmission section is configured to turn on or off the bidirectional switch circuit 117 included in the at least one power transmission resonance capacitor unit 116 to switch the capacitance Ct across the at least one power transmission resonance capacitor unit 116 to one of controlled capacitances. This switching of the capacitance Ct across the at least one power transmission resonance capacitor unit 116 to one of the controlled capacitances enables the current flowing through the at least one power transmission coil 112 to be switched to one of the controlled values. The configuration of the switching unit 174, which uses the bidirectional switch circuit 117 to change the capacitance Ct across the at least one power transmission resonance capacitor unit 116, enables change of the capacitance Ct across the at least one power transmission resonance capacitor unit 116 while preventing an increase in size of the at least one power transmission resonance capacitor unit 116.

The receiver 172 of the power transmission apparatus 100 provided in each power transmission section is configured to receive the power-transfer request signal when transmitted thereto from the power receiving apparatus 200; the power-transfer request signal includes the ID information linked to at least one of (i) the vehicle CR equipped with the power receiving apparatus 200, (ii) the power receiving coil 212 included in the power receiving apparatus 200, and (iii) a user of the power receiving apparatus 200. This configuration of the power transmission apparatus 100 therefore identifies the power receiving apparatus 200, which needs power transfer, using the ID information on the power receiving apparatus 200, and thereafter performs power transfer to the power receiving apparatus 200, making it possible to prevent another power receiving apparatus that does not need power transfer and therefore does not transmit the power-transfer request signal to the power transmission apparatus 100.

The power transmission apparatus 100 provided in each power transmission section includes, as the at least one power transmission coil 112, a plurality of power transmission coils 112. The power transmission coils 112 are aligned to constitute a first power transmission section SC1 that is one of the power transmission sections SC, which is arranged in the traveling direction of the vehicle CR, i.e., the X-axis direction. The receiver 172 is arranged adjacent to the end coil 112P of the power transmission coils 112, which is located at one end of the first power transmission section SC1, i.e., one end of the alignment of the power transmission coils 112 constituting the first power transmission section SC1. This configuration therefore enables the receiver 172 to reliably receive the power-transfer request signal transmitted from the power receiving apparatus 200 when the power receiving apparatus 200 enters the first power transmission section SC1 from outside, thus reliably switching each power transmission coil 112 included in the first power transmission section SC1 to a state enabled to reliably transfer power therefrom to the power receiving apparatus 200.

When the power transmission coils 112 are aligned to constitute the first power transmission section SC1, the receiver 172 of the power transmission apparatus 100 provided in the first power transmission section SC1 is located adjacent to only the end coil 112P through which the vehicle CR can pass first assuming that the traveling route of the vehicle CR overlaps the first power transmission section SC1. This configuration enables, after start of power transfer from the end coil 112P to the power receiving coil 212, magnetic flux generated due to resonance between the end coil 112P and the power receiving coil 212 to start power transfer from the adjacent power transmission coil 112Q adjacent to the end coil 112P included in the first power transmission section SC1 to the power receiving coil 212 without using short-range communications.

The receiver 172 of the power transmission apparatus 100 provided in the first power transmission section SC1 is capable of receiving short-range communication signals within the predetermined first communication range of 5 m or less. This therefore offers (i) improvement of identification performance of each vehicle CR with respect to the other traveling vehicles, (ii) improvement of electromagnetic compatibility (EMC) of each power transmission apparatus 100, and (iii) reduction in each of unnecessary power consumption and unnecessary magnetic-flux generation due to the other non-selected power transmission resonators 110 being in the non-facing state.

The switching unit 174 of the power transmission apparatus 100 provided in each power transmission section is integrated with the at least one power transmission coil 112. This results in the power transmission apparatus 100 provided in each power transmission section having a smaller size as compared with a case where the switching unit 174 is connected to the power transmission circuit 130. If the power transmission apparatus 100 provided in each power transmission section includes, as the at least one power transmission coil 112, a plurality of power transmission coils 112, the switching unit 174 can be integrated with all the power transmission coils 112, enabling all the power transmission coils 112 to share wirings connecting between them and the power transmission circuit 130.

The power transmission apparatus 100 provided in each power transmission section according to the first embodiment includes the power-transmitter controller 180 and the power-transmitter wide-range communications unit 190. The power-transmitter wide-range communications unit 190 is configured to receive wide-area communication signals over a predetermined second communication range of greater than 5 m. The power-transmitter controller 180 is configured to activate or deactivate the power transmission circuit 130.

Specifically, the power-transmitter controller 180 is configured to activate the power transmission circuit 130 when the power-transmitter wide-range communications unit 190 receives the wide-area communication signal. This configuration therefore enables the power transmission circuit 130 to be activated to be in the standby mode before power transfer in response to receiving the wide-area communication signal from the power receiving apparatus 200, resulting in shorter time required for the power transmission circuit 130 to be switched to be in the power transfer mode when the power receiving apparatus 200 is approaching the power transmission apparatus 100.

The power-transmitter controller 180 of the power transmission apparatus 100 according to the first embodiment is configured to activate the power transmission circuit 130 in response to determination that (i) the power-transmitter wide-range communications unit 190 receives the wide-area communication signal and (ii) the power receiving apparatus 200 is located at a position smaller than or equal to the preparation range DT1 from the power transmission apparatus 100.

This configuration keeps deactivation of the power transmission circuit 130 unless the power receiving apparatus 200 is located within the preparation range DT1, making it possible to reduce or prevent unnecessary power supply from the power transmission circuit 130.

The power-transmitter controller 180 of the power transmission apparatus 100 according to the first embodiment is configured to deactivate the power transmission circuit 130 to accordingly switch the operation mode of the power transmission apparatus 100 to the cutoff mode upon determination that power transfer from the power transmission apparatus 100 to the power receiving apparatus 200 has not been carried out for a predetermined period. This makes it possible to prevent the occurrence of unnecessary power consumption in the power transmission apparatus 100 after completion of power transfer from the power transmission apparatus 100 to the power receiving apparatus 200.

The power transmission apparatus 100 provided in each power transmission section according to the first embodiment includes the current sensor 310, which serves as a power-transmitter measurement circuit, for measuring a current flowing through the at least one power transmission coil 112. The switching unit 174 is configured to switch a current value flowing through the at least one power transmission coil 112 to a value smaller than the power-transferable value in response to determination that, after completion of power transfer from the at least one power transmission coil 112 to the power receiving apparatus 200, the current value measured by the current sensor 310 is smaller than or equal to a predetermined threshold. The above simpler configuration of the power transmission apparatus 100 using the switching circuit 174 makes it possible to detect that the power receiving apparatus 200 becomes in the non-facing state with respect to the at least one power transmission coil 112 after the completion of power transfer to accordingly switch the operation mode of the power transmission apparatus 100 to the cutoff mode.

### Other embodiments and/or modifications

The power transmission coils 112 according to the first embodiment are arranged to be adjacent to one another, but are not necessarily arranged to be adjacent to one another. Specifically, the power transmission coils 112 can be arranged to be separated from one another. The power transmission coils 112 are preferably arranged to be adjacent to one another to smoothly perform power transfer from the power transmission coils 112 to the power receiving coil 212 while the vehicle CR is traveling. If the power transmission coils 112 are arranged to be separated from one another, a separation distance between each adjacent pair of power transmission coils 112 can be preferably set to be half or less the width of each power transmission coil 112, such as set to be the radius or less if each coil 112 is a circular coil.

The second power transmission section SC2 according to the first embodiment, which has the same configuration as that of the first power transmission section SC1, is located to be separated by the predetermined distance from the first power transmission section SC1.

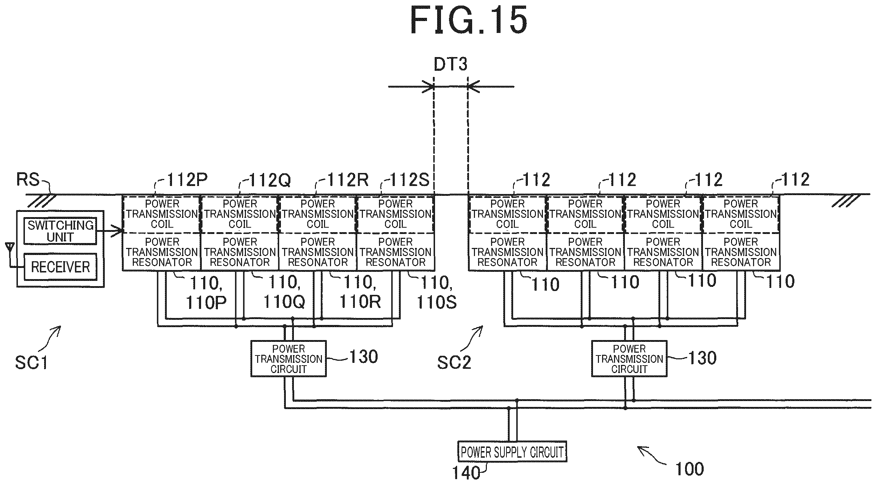

In contrast, the second power transmission section SC2 can be located to be adjacent to the first power transmission section SC1 (see Fig. 15). Specifically, Fig. 15 illustrates a distance DT3 between the adjacently arranged first and second power transmission sections SC1 and SC2 according to the second embodiment of the present disclosure. If the distance DT3 is small enough for it to be regarded that the first and second power transmission sections SC1 and SC2 are continuously arranged, the power transmission apparatus 100 included in the second power transmission section SC1 is capable of detecting magnetic flux generated in the power receiving coil 212 during power transfer from the first power transmission section SC1 to the power receiving coil 212, making it possible to eliminate the power-transmitter dedicated short-range communications unit 170 included in the second power transmission section SC2.

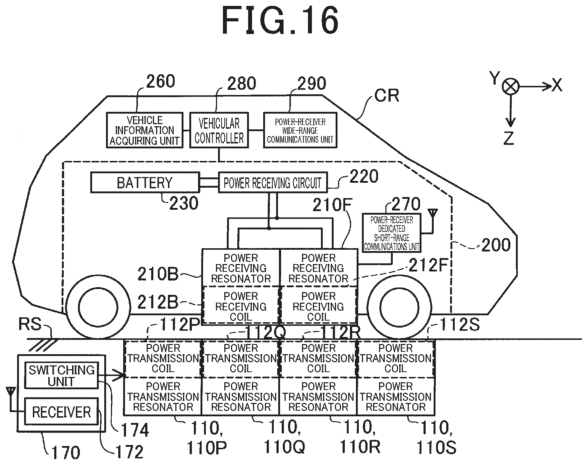

The vehicle CR according to the first embodiment is equipped with the single power receiving resonator 2210, but the vehicle CR can be equipped with, as illustrated in Fig. 16, at least two power receiving resonators 210. Fig. 16 illustrates, as the third embodiment of the present disclosure, an example where the vehicle CR is equipped with two power receiving resonators 210F and 210B, so that each of two power receiving coils 212F and 212B of the respective power receiving resonators 210F and 210B is configured to receive power transferred from the corresponding one of the two power transmission coils 112Q and 112R. In this case, the power-receiver dedicated short-range communications unit 270 is preferably located adjacent to the power receiving coil 212F that is located at the head of the vehicle CR in the traveling direction of the vehicle CR. Locating the power-receiver dedicated short-range communications unit 270 at the head of the vehicle CR in the traveling direction of the vehicle CR enables the power-receiver dedicated short-range communications unit 270 to establish short-range communications with the power transmission apparatus 100 as early as possible during traveling of the vehicle CR. This therefore reduces or prevents delay in power transfer from the end coil 112P of the power transmission apparatus 100 due to, for example, delay in the short-range communications, thus reducing or preventing the occurrence of glitches, such as power transfer delay from the power transmission apparatus 100 to the power receiving apparatus 200 although the leading power receiving coil 212F arrives at a position facing the end coil 112P.

The power transmission apparatus 100 provided in each power transmission section according to the first embodiment includes the current sensor 310, which serves as a power-transmitter measurement circuit, and the current sensor 322 of each variable control circuit 320 is configured to measure change in current flowing through the corresponding power transmission coil 112.

In contrast, because a voltage applied across each power transmission coil 112 is changed like the coil current flowing therethrough, voltage sensors can be used as sensers of the power-transmitter measurement circuit and each variable control circuit. That is, the voltage sensor provided for each power transmission coil 112 can be configured to measure change in the voltage across the corresponding power transmission coil 112. Alternatively, magnetic sensors or magnetic-flux detection devices can be used as sensers of the power-transmitter measurement circuit and each variable control circuit, each of which can be configured to measure a magnetic field or magnetic flux generated in the corresponding power transmission coil.

The power transmission resonance capacitor unit 116P according to the first embodiment is configured as a capacitor unit that includes at least the first and second resonance capacitors 116Pa and 116Pb and the bidirectional switch circuit 117, but each power transmission resonance capacitor unit 116 can include a variable capacitor with a variable capacitance. As the variable capacitor, a usually available variable capacitor can be used whose capacitance Ct varies depending on a control voltage Vc applied thereacross from the switching unit 174 or the variable control circuit 320. The capacitance Ct across the variable capacitor is set to a predetermined resonance capacitance C1 that meets a resonance condition that causes the power receiving resonator 210 to resonate with the corresponding power transmission resonator 110 when the power receiving coil 212 is in the facing state with respect to the corresponding power transmission coil 112. In addition, the capacitance Ct across the variable capacitor is set to a value smaller than the resonance capacitance C1, which does not meet the resonance condition, when the power receiving coil 212 is in the non-facing state with respect to the corresponding power transmission coil 112.

In place of (i) the power transmission resonance capacitor unit 116 configured as a capacitor unit that includes at least the first and second resonance capacitors 116Pa and 116Pb and the bidirectional switch circuit 117 or (ii) such a variable capacitor, a capacitor with a constant capacitance can be used. In this case, the power transmission resonator 110 can include a switching device, such as a semiconductor switch, and the switching unit 174 or the variable control circuit 320 can be configured to control on-off operations of the semiconductor switch to accordingly change the input impedance Z1 of the power transmission resonator 110. Specifically, the switching unit 174 or the variable control circuit 320 can be configured to turn on the semiconductor switch to accordingly set the input impedance Z1 to substantially zero, and turn off the semiconductor switch to accordingly set the input impedance Z1 to substantially an infinite value. The power transmission circuit 100 according to this modification, which has a simpler configuration, makes it possible to change a value of current flowing through the power transmission resonator 110.

In the first embodiment, the four power transmission resonators 110P, 110Q, 110R, and 110S are sequentially embedded in the vehicle traveling road RS while being aligned linearly in the traveling direction of the vehicle CR, i.e., the X-axis direction, and the four power transmission resonators 110P, 110Q, 110R, and 110S constitute the first power transmission section SC1 arranged linearly in the traveling direction of the vehicle CR.

The power transmission resonators 110 are however not limited to be aligned linearly, but can be continuously aligned linearly in both (i) the traveling direction of the vehicle CR and (ii) a direction, such as the width direction of the vehicle CR, i.e., the Y-axis direction, intersecting with the traveling direction of the vehicle CR. This configuration results in the power transmission resonators 110 being arranged in a substantially rectangular array, which constitutes a rectangular planar first power transmission section SC1.

If the power transmission resonators 110 are arranged in both the X- and Y-directions as a substantially rectangular array to constitute the rectangular planar first power transmission section SC1, the power transmission resonators 110 respectively arranged at both ends of the first power transmission section SC1 mean power transmission resonators arranged at peripheral edges of the rectangular plane-like first power transmission section SC1. The power-transmitter dedicated short-range communications unit 170 can be arranged adjacent to the end coil 112P of at least one of the power transmission resonators 110 arranged at the peripheral edges of the rectangular plane-like first power transmission section SC1. This enables, even if there are plural directions in which the vehicle CR can enter the rectangular plane-like first power transmission section SC1, the end coil 112P included in the two-dimensionally rectangular first power transmission section SC1 to be reliably switched to the power transfer mode when the vehicle CR enters the rectangular plane-like first power transmission section SC1.

The first embodiment describes an example where power is transferred from each power transmission coil 112 to the power receiving coil 212, but the present disclosure is not limited thereto. Specifically, if the power transmission apparatus 100 and the power receiving apparatus 200 share one or more other resonance coils, such as relay coils, used to transfer power from the power transmission apparatus 100 to the power receiving apparatus 200, the switching unit 174 can be for example configured to switch the state of each of the one or more other resonance coils between a resonant state with a selected power transmission coil 112 and the power receiving coil 212 and a non-resonant state therewith.

The second power transmission section SC2 according to the first embodiment, which has the same configuration as that of the first power transmission section SC1, is located to be separated by the predetermined distance from the first power transmission section SC1.

If the power transmission apparatus 100 is included in the first and second power transmission sections SC1 and SC2, the power-transfer request signal receiver provided in one of the first and second power transmission sections SC1 and SC2 and the power-transfer request signal receiver provided in the other thereof can be arranged to be separated from one another.

The separation distance between the power-transfer request signal receiver provided in one of the first and second power transmission sections SC1 and SC2 and the power-transfer request signal receiver provided in the other thereof can be preferably set to be greater than the communication range of the dedicated short-range communications. A second power transmission section included in a plurality of power transmission sections, which is located adjacent to a first power transmission section included in the plurality of power transmission sections, is not limited to be located adjacent to the first power transmission section in the traveling direction of the vehicle CR illustrated in Fig. 1. Specifically, the first power transmission section is located in one of plural own lanes included in the traveling road RS whose traveling directions are the same, and the second power transmission section can be located in another one of the plural own lanes adjacent to the one of the own lanes. Additionally, the first power transmission section is located in one of the plural own lanes included in the traveling road RS, and the second power transmission section can be located in an oncoming lane adjacent to the one of the own lanes. This configuration reduces or prevents the occurrence of glitches, such as short-range communications inference between the first and second power transmission sections

The controllers and their methods described in the present disclosure can be implemented by a dedicated computer including a memory and a processor programmed to perform one or more functions embodied by one or more computer programs.

The controllers and their methods described in the present disclosure can also be implemented by a dedicated computer including a processor comprised of one or more dedicated hardware logic circuits.

The functional configurations and methods described in the present disclosure can further be implemented by a processor system comprised of a memory, a processor programmed to perform one or more functions embodied by one or more computer programs, and one or more hardware logic circuits.

The one or more computer programs can be stored in a non-transitory storage medium as instructions to be carried out by a computer or a processor. The functional configurations and methods described in the present disclosure can be implemented as one or more computer programs or a non-transitory storage medium that stores these one or more computer programs.

The present disclosure is not limited to the above exemplary embodiments, and is freely modified as various embodiments within the scope of the subject matter of the present disclosure.

For example, technical features described in the exemplary embodiments, each of which corresponds to a technical feature of the above exemplary aspects of the present disclosure described in the DETAILED DESCRIPTION OF EMBODIMENTS can be replaced with other features or combined with each other for solving a part or whole of the above problem. At least one of the technical features described in the exemplary embodiments, which has not been explained in the present specification as an essential feature, can be freely eliminated.

## Claims

1. A power transmission apparatus (100) for wireless power transfer to a movable power receiving apparatus (200), the power transmission apparatus comprising:
a power transmission resonator (110) that includes a power transmission coil (112) and a power transmission resonance capacitor unit (116);
a power transmission circuit (130) for supply of alternating-current power to the power transmission resonator;
a power-transfer request signal receiver (172) configured to receive a power-transfer request signal transmitted from the power receiving apparatus; and
a switching unit (174) configured to, when the power-transfer request signal receiver receives the power-transfer request signal, change an input impedance of the power transmission resonator (110) to change a value of current flowing through the power transmission coil of the power transmission resonator to a controlled value enabled to transfer power from the power transmission coil to the power receiving apparatus.

2. The power transmission apparatus according to claim 1, wherein:
the power transmission resonance capacitor unit comprises a variable capacitor with at least first and second capacitances different from one another; and
the switching unit is configured to switch between the first and second capacitances of the variable capacitor to change the input impedance of the power transmission resonator.

3. The power transmission apparatus according to claim 1, wherein:
the power transmission resonance capacitor unit comprises at least first and second capacitors and a switch circuit; and
the switching unit is configured to control on-off operations of the switch circuit to change a capacitance across the power transmission resonance capacitor unit, thus changing the input impedance of the power transmission resonator.

4. The power transmission apparatus according to claim 1, further comprising:
a switching device provided between the power transmission resonator and the power supply circuit, wherein:
the switching unit is configured to control on-off operations of the switching device to enable or disable power supply between the power transmission resonator and the power supply circuit, thus changing the input impedance of the power transmission resonator.

5. The power transmission apparatus according to any one of claims 1 to 4, wherein:
the power-transfer request signal receiver is configured to receive the power-transfer request signal when transmitted thereto from the power receiving apparatus, the power-transfer request signal including the ID information linked to at least one of (i) a vehicle equipped with the power receiving apparatus, (ii) the power receiving coil included in the power receiving apparatus, and (iii) a user of the power receiving apparatus; and
the switching unit 174 is configured to perform whether to give permission to the power receiving apparatus for the power transfer in accordance with the ID information.

6. The power transmission apparatus according to any one of claims 1 to 5, wherein:
the power transmission resonator comprises, as the power transmission coil, a plurality of power transmission coils;
the power transmission coils have one of (i) a linear arrangement in a predetermined first direction to constitute at least one power transmission section and (ii) a two-dimensional arrangement in both the predetermined first direction and a predetermined second direction intersecting with the first direction to constitute the at least one power transmission section (SC1, SC2), the at least one power transmission section having at least first and second ends thereof, the power transmission coils including at least first and second end coils located respectively adjacent to the at least first and second ends of the at least one power transmission section; and
the power-transfer request signal receiver is located adjacent to at least one of the at least first and second end coils.

7. The power transmission apparatus according to any one of claims 1 to 6, wherein:
the power-transfer request signal receiver is located adjacent to only the first end coil located adjacent to the first end of the at least one power transmission section, the first end coil being an end coil through which the power receiving apparatus passes first assuming that a moving route of the power receiving apparatus overlaps the at least one power transmission section.

8. The power transmission apparatus according to claim 6 or 7, wherein:
the at least one power transmission section comprises a plurality of power transmission sections that includes at least first and second power transmission sections;
the power-transfer request signal receiver comprises at least first and second power-transfer request signal receivers provided in the respective at least first and second power transmission sections; and
the first power-transfer request signal receiver provided in the first power transmission section is located to be separated from the second power-transfer request signal receiver provided in the second power transmission section.

9. The power transmission apparatus according to any one of claims 1 to 8, wherein:
the power-transfer request signal receiver is configured to receive, as the power-transfer request signal, a short-range communication signal within only a predetermined first communication range of 5 m or less.

10. The power transmission apparatus according to any one of claims 1 to 9, wherein:
the switching unit is integrated with the power transmission coil.

11. The power transmission apparatus according to any one of claims 1 to 10, further comprising:
a wide-range communications unit configured to receive a wide-area communication signal a predetermined second communication range of greater than 5 m; and
a power-transmitter controller configured to activate or deactivate the power transmission circuit,
wherein:
the power-transmitter controller is configured to activate the power transmission circuit when the wide-range communications unit receives the wide-area communication signal.

12. The power transmission apparatus according to any one of claims 1 to 11, wherein:
the power-transmitter controller is configured to activate the power transmission circuit in response to determination that (i) the wide-range communications unit receives the wide-area communication signal, and (ii) the power receiving apparatus is located at a position smaller than or equal to a predetermined preparation range (DT1) from the power transmission apparatus.

13. The power transmission apparatus according to claim 11, wherein:
the power-transmitter controller is configured to deactivate the power transmission circuit upon determination that power transfer from the power transmission apparatus to the power receiving apparatus has not been carried out for a predetermined period.

14. The power transmission apparatus according to any one of claims 1 to 13, further comprising:
a power-transmitter measurement circuit (310, 322) configured to measure a value of at least one of a current flowing through the power transmission coil, a voltage applied to the power transmission coil, and a magnetic field induced in the power transmission coil,
wherein:
the switching unit, which has changed the input impedance of the power transmission resonator to change the value of current flowing through the power transmission coil of the power transmission resonator to the controlled value that is a controlled first value enabled to transfer power from the power transmission coil to the power receiving apparatus, is configured to:
determine whether the measured value by the power-transmitter measurement circuit is smaller than or equal to a predetermined threshold; and
change, in response to determination that the measured value by the power-transmitter measurement circuit is smaller than or equal to the predetermined threshold, the input impedance of the power transmission resonator to change a current value flowing through the power transmission coil of the power transmission resonator from the controlled first value to a controlled second value smaller than the controlled first value.

15. The power transmission apparatus according to any one of claims 1 to 14, wherein:
the switching unit, which has changed the input impedance of the power transmission resonator to change the value of current flowing through the power transmission coil of the power transmission resonator to the controlled value that is a controlled first value enabled to transfer power from the power transmission coil to the power receiving apparatus, is configured to change, in response to determination that the power-transfer request signal is not received by the power-transfer request signal receiver, the input impedance of the power transmission resonator to change a current value flowing through the power transmission coil of the power transmission resonator from the controlled first value to a controlled second value smaller than the controlled first value.

16. A wireless power transfer system comprising:
the power transmission apparatus according to any one of claims 1 to 15; and
a power-transfer request signal transmitter (270) configured to transmit the power-transfer request signal.

17. A method of wireless power transfer to a movable power receiving apparatus (200), the method comprising:
receiving a power-transfer request signal transmitted from the power receiving apparatus; and
changing, in response to receiving the power-transfer request signal, a value of current flowing through a power transmission coil included in a power transmission resonator to a controlled value enabled to transfer power from the power transmission coil to the power receiving apparatus.

18. A computer program product for wireless power transfer to a movable power receiving apparatus, the computer program product comprising computer-program instructions,
the computer-program instructions causing a computer to:
receive a power-transfer request signal transmitted from the power receiving apparatus; and
change, in response to receiving the power-transfer request signal, a value of current flowing through a power transmission coil included in a power transmission resonator to a controlled value enabled to transfer power from the power transmission coil to the power receiving apparatus.
